Europäisches Patentamt

European Patent Office

Office européen des brevets

(19)

(11) Publication number: **0 165 999**
**A1**

# EUROPEAN PATENT APPLICATION

published in accordance with Art. 158(3) EPC

(21) Application number: **85900184.4**

(22) Date of filing: **14.12.84**

Data of the international application taken as a basis:

(86) International application number: **PCT/JP 84/00590**

(87) International publication number: **WO 85/02693 (20.06.85 85/14)**

(51) Int. Cl.⁴: **G 05 B 19/403**
**// B23Q15/00**

(30) Priority: **14.12.83 JP 235457/83**

(43) Date of publication of application: **02.01.86**
**Bulletin 86/1**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **KISHI, Hajimu, Hino Hirayamadai Jutaku 1104 6-7-8, Asahigaoka, Hino-shi Tokyo 191 (JP)**
Inventor: **SEKI, Masaki, 3-15-2-406, Takaido-nishi Suginami-ku, Tokyo 168 (JP)**
Inventor: **TANAKA, Kunio, 5-8-13, Tamakawa-cho Akishima-shi, Tokyo 196 (JP)**
Inventor: **MATSUMURA, Teruyuki, 38-8, Matsugaya Hachioji-shi, Tokyo 192-03 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **TOOL-SELECTING METHOD FOR AUTOMATIC PROGRAMMING.**

(57) A tool-selecting method for automatic programming comprises the steps of: preparing a tooling file by storing in a memory (201) data on a plurality of tools which are simultaneously mounted on a turret, such as the name of a machining step in which each of these tools is employed, tool configuration data, and data on how each tool is mounted on the turret, and also storing in the memory (201) a plurality of tooling files (#1, #2;...#3) which have different combinations of tools; specifying which tooling file to use, together with data for specifying a final part configuration and a machining step; and selecting a tool for the specified machining step from the specified tooling file.

## DESCRIPTION

### Technical Field

This invention relates to a tool selection method in automatic programming and, more particularly, to a tool selection method which includes creating, as one tooling file for a plurality of tools loaded simultaneously on a turret, the name of a machining process in which each tool is used, data indicative of the shape of each tool, and data indicative of how each tool is mounted on the turret, registering beforehand a plurality of tooling files having different tool combinations, specifying a predetermined tooling file together with data specifying a part profile and machining process, and selecting from the tooling file a tool used in the machining process.

### Background Art

Automatic programming systems have come into practical use and are utilized to create NC tapes from a design drawing through a simple operation by entering data in a conversational mode using a graphic display screen. With such an automatic programming system, a machining profile can be entered merely by pressing profile symbol keys, which are located on an operator's panel, corresponding to a workpiece profile written on a design drawing. Further, according to the automatic programming system, referential information is graphically displayed on the screen from time to time and inquiries are made in ordinary language, so that dimensions and various data can be entered in response to the inquiries. When all data necessary for creation of an NC tape have been entered, the system immediately displays graphically the blank profile and the machined profile (finished profile), begins automatic calculation of NC command data and graphically displays a tool path to create an NC tape. A programming method performed by such an automatic programming system will now be described in detail. The method comprises the following steps:

(1)   blank material selection step;

(2)   drawing mode selection step;

(3)   blank profile and dimensions input step;

(4)   part profile and dimensions input step;

(5)   machine reference point and turret position input step;

(6)   machining process selection step;

(7)   tool selection step;

(8)   machining limits and cutting condition designation step; and

(9)   tool path calculation step.
The necessary data are entered successively to eventually create the NC data (NC tape).

The steps (6) through (8) are repeated until the final finished profile is obtained. Specifically, when it is turn for the machining process selection step, a prompt for selecting the machining process is displayed

0165999

on the graphic display screen. Accordingly, depending upon the machining process which is to be performed, one enters the name of the desired machining process from among those being displayed on the screen. This is followed by determining the tool to be used in the entered machining process, entering data relating to the tool, and entering the cutting conditions, cutting direction and cutting area. It should be noted that data relating to the tool include tool number, tool position correction number, tool shape data and data indicative of how the tool is mounted on the turret. Tool shape data include tool nose radius, cutting blade angle, nose angle, imaginary nose position and nose width. The data indicative of how the tool is mounted to the turret include the angle at which the tool is mounted on the turret, the position at which the tool is mounted on the turrent, and the like.

Thereafter, when a different area is to be cut with the same tool, the fact is entered. Also entered are the cutting direction and the area. On the other hand, if it is unnecessary to cut a different area with the same tool, the fact is entered. Thus, when entry of data necessary for machining in accordance with the first machining process is completed, the operator decides whether a different machining process is required in order to obtain the final part profile (finished profile); if one is, the fact is entered. Thereafter, if machining process selection, entry of data indicative of the tool to be used, and entry of cutting conditions, cutting direction and cutting area are carried out in the above fashion until the finished profile is obtained, then all the necessary data will have been entered. An automatic programming unit then creates NC data on the basis of the input data and causes a tool trajectory to be displayed on the graphic display screen, thus ending programming.

Thus, with the conventional method, the programmer must determine, for every machining process, the tool used in the machining process, and he must then enter the tool number of the tool, the tool position correction number, the various items of tool shape data and the tool mounting data. As a result, operation is troublesome and a long period of time is needed for programming. In particular, since a tool will strike (interfere with) a workpiece unless an appropriate tool is selected, the programmer follows steps of choosing a tool which will not interfere with the workpiece upon taking the part profile into consideration, and entering the tool shape data and tool mounting data. Considerable skill is therefore required.

Accordingly, an object of the present invention is to provide a tool selection method in automatic programming whereby a tool which will not interfere with a workpiece can be selected automatically if a part profile and machining process are specified, even when the tool is one for the machining process.

Another object of the present invention is to provide a tool selection method in automatic programming whereby a tool selection can be performed in a short period of time.

A further object of the present invention is to provide a tool selection method in automatic programming having excellent operability, in which tool shape data and tool mounting data need not be entered item by item.

Still another object of the present invention is to provide a tool selection method which includes creating, as one tooling file for a plurality of tools loaded simultaneously on a turret, the name of a machining process in which each tool is used, data indicative of the shape of each tool, and data indicative of how each tool is mounted on the turret, registering beforehand a plurality of tooling files having different tool combinations, specifying a predetermined tooling file together with data specifying a part profile and machining process, and selecting from tools constituting the tooling file a tool used in the machining process.

Disclosure of the Invention

The present invention provides a tool selection method in automatic programming which includes creating a tooling file for a plurality of tools loaded simultaneously on a turret by registering in memory the name of a machining process in which each tool is used, data indicative of the shape of each tool, and data indicative of how each tool is mounted on the turret, registering beforehand a plurality of tooling files having different tool combinations, specifying a predetermined tooling file together with data specifying a final part profile and machining process, and selecting a tool for the specified machining process from tools constituting the tooling file.

Brief Description of the Drawings

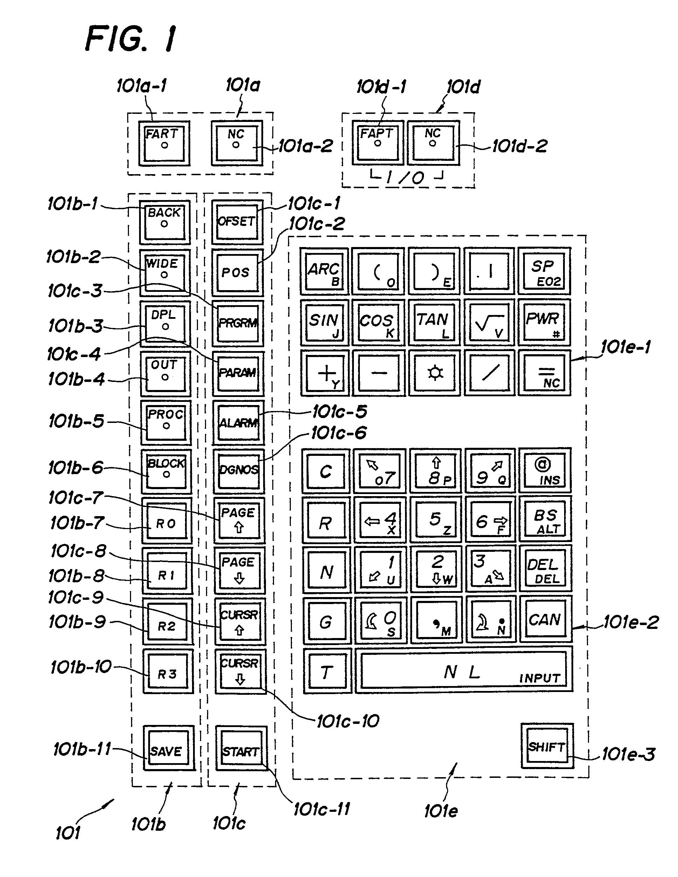

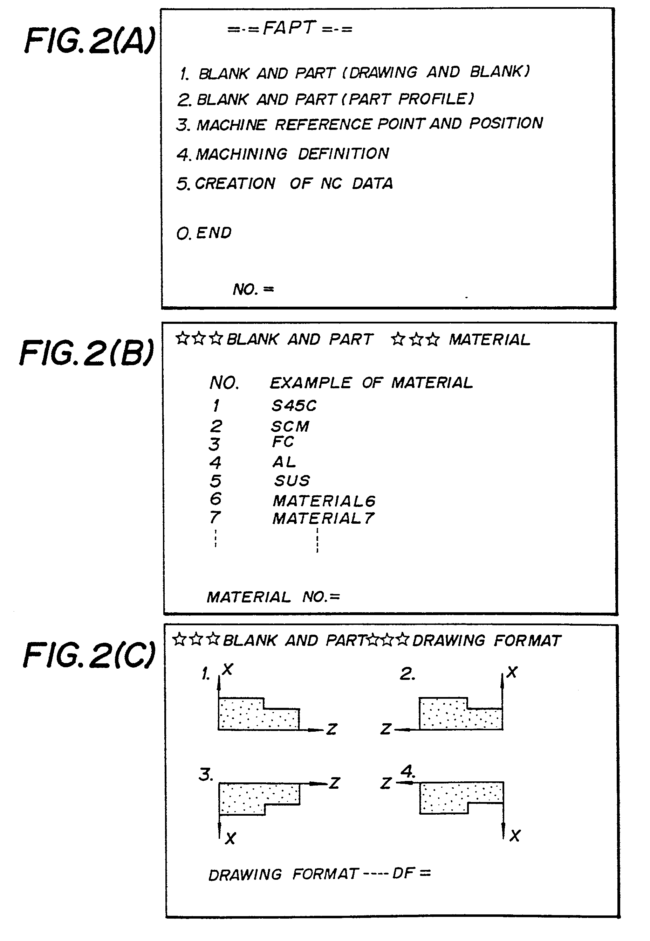

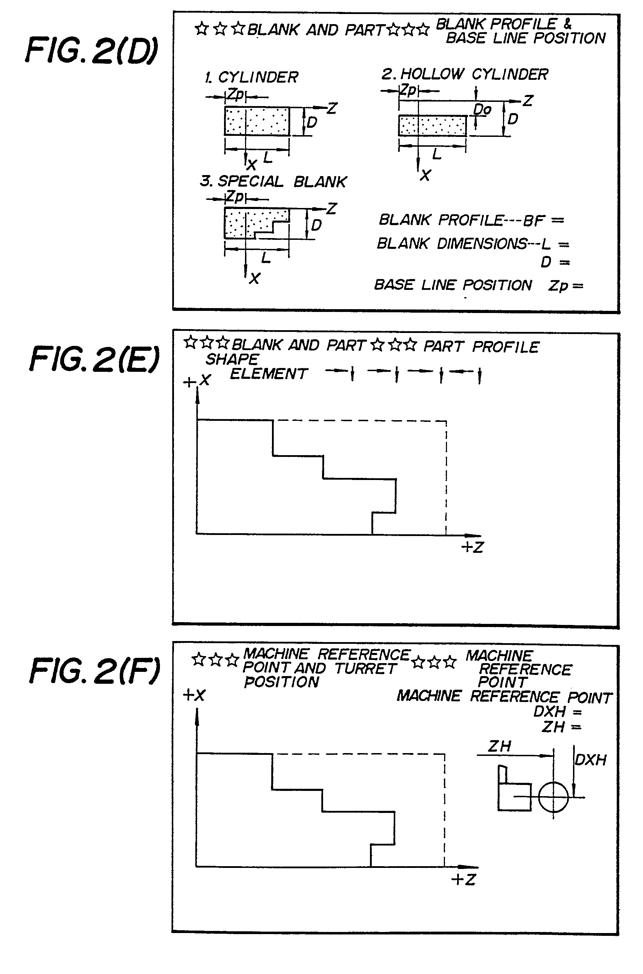

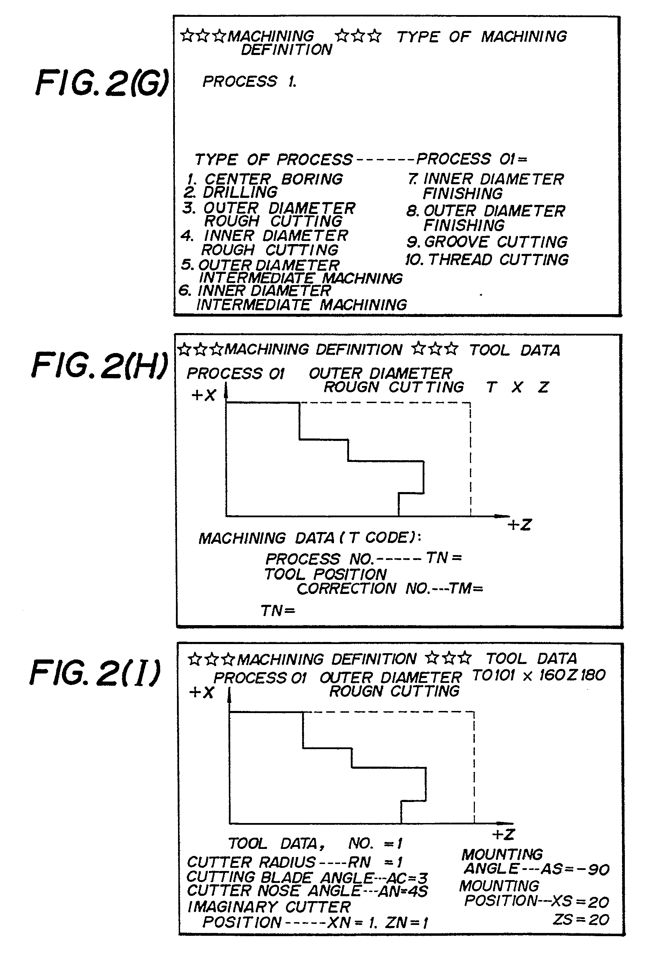

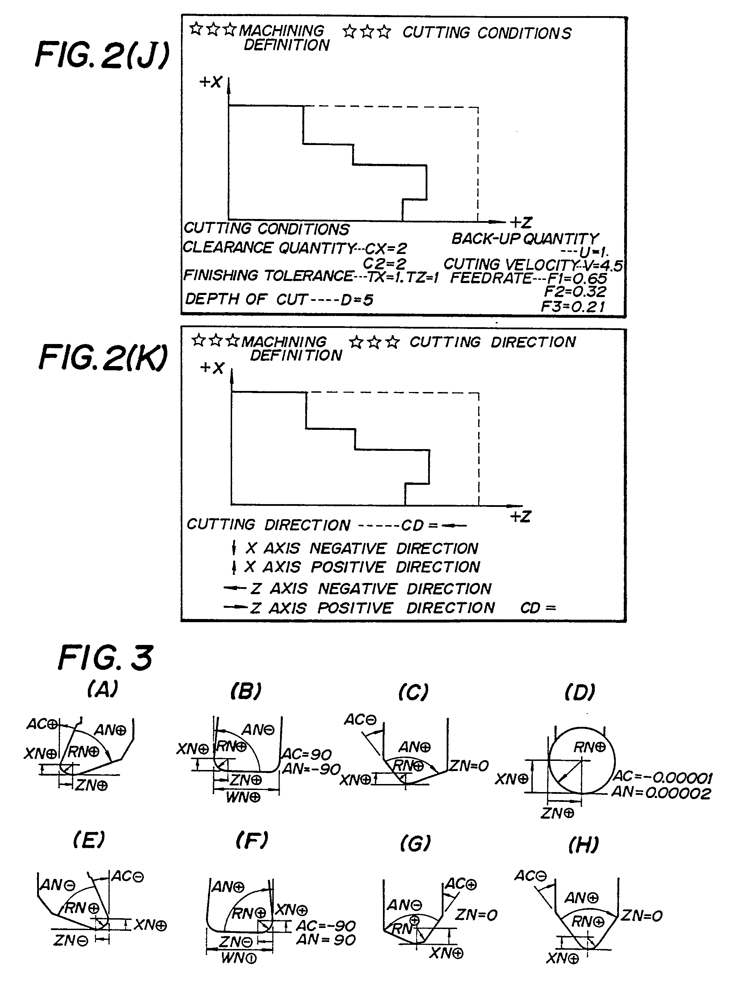

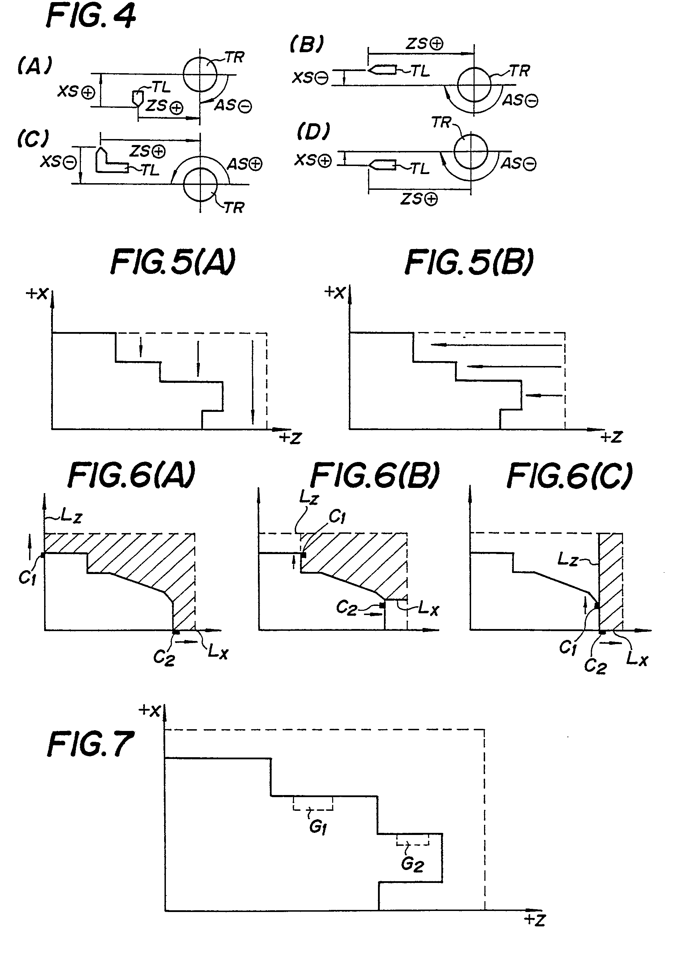

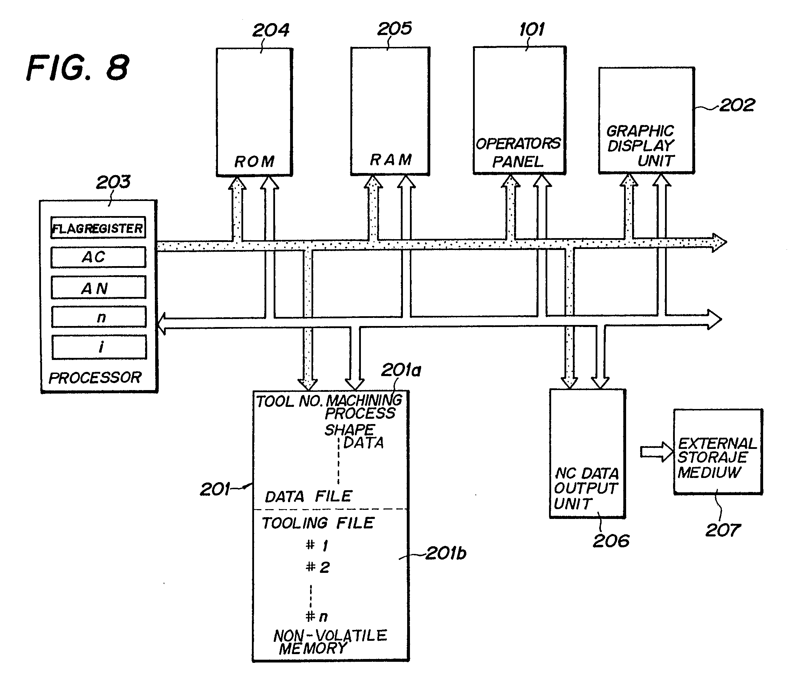

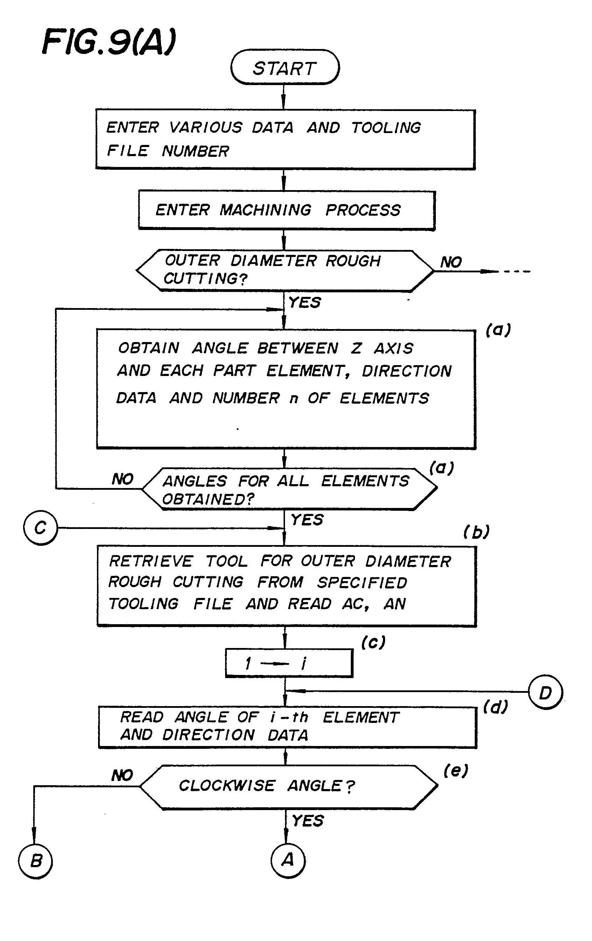

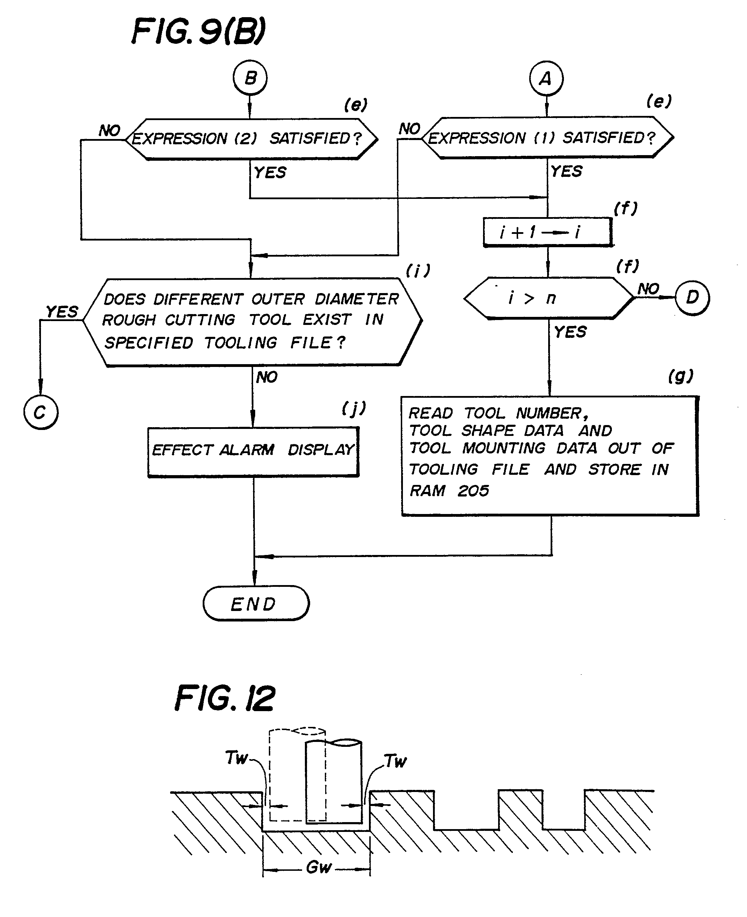

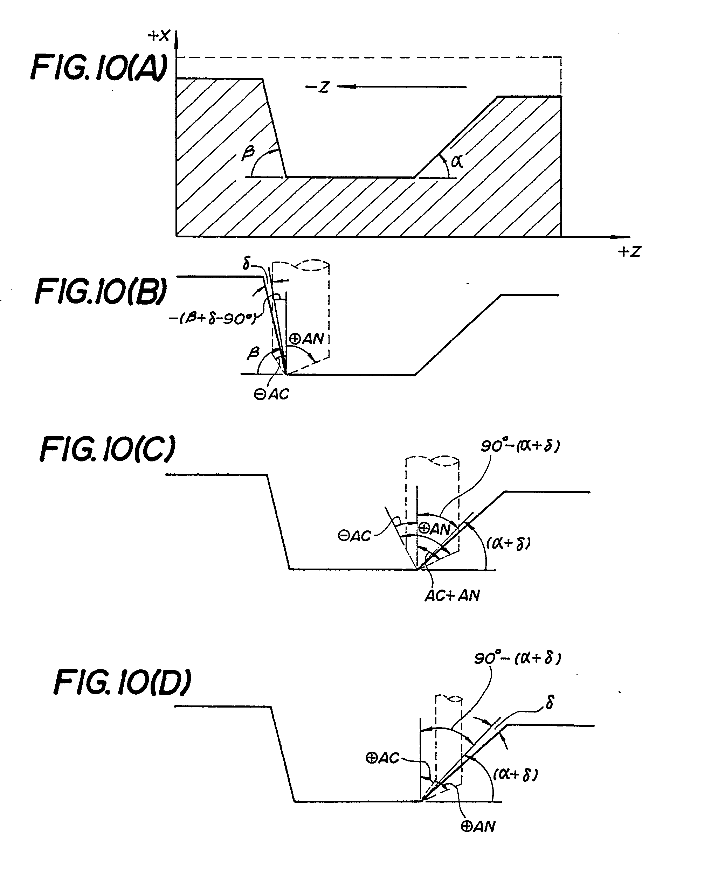

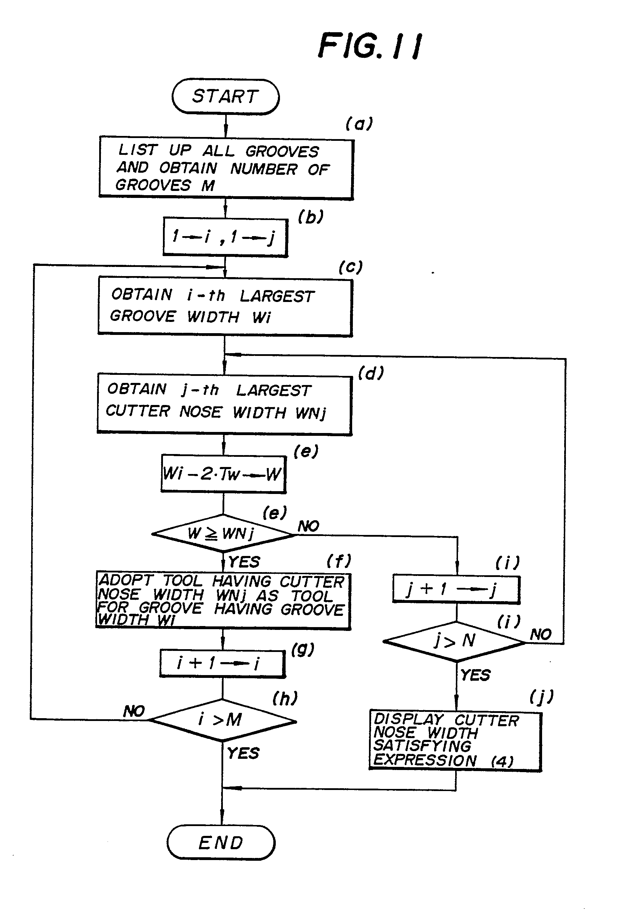

Fig. 1 is a view showing the arrangement of an operator's panel, Fig. 2 is an explanatory view showing an example of a display for describing the conventional method, Fig. 3 is view for describing tool shape, Fig. 4 is a view for describing the mounting of a tool on a turret, Fig. 5 is a view for describing entry of cutting direction according to the prior art, Fig. 6 is a view for describing entry of machining area, Fig. 7 is a view for describing a case where two or more locations are machined by the same tool, Fig. 8 is a block diagram of an embodiment of the present invention, Fig. 9 is a flowchart of processing according to the present invention, Fig. 10 is a view for describing tool interference, Fig. 11 is a flowchart of processing for selecting a tool for groove cutting, and Fig. 12 is a view for describing the effective groove width of the tool for groove cutting.

Best Mode for Carrying Out the Invention

Before describing the present invention, a conventional method of automatic programming will be discussed with reference to Figs. 1 through 7 so that the present invention may be better understood. The present invention represents an improvement upon a conventional step (7) set forth hereinbelow.

Fig. 1 is a view showing the arrangement of an operator's panel 101 used in an NC system equipped with an automatic programming function. Classified generally, the operator's panel has: (a) a one-of-two selection key group 101a for selecting whether the operator's panel 101 is to be used on behalf of an automatic programming unit (referred to as the FAPT mode) or on behalf of an NC unit (referred to as the NC mode), (b) a key group 101b used for the automatic programming unit, (c) a key group 101c used for the NC unit, (d) an I/O selection key group 101d for selectively connecting a data input/output unit to the automatic programming unit and NC unit, and (e) a common data input key group 101e used with both the automatic programming unit and NC unit. The one-of-two selection key group 101a has a FAPT key 101a-1 and an NC key 101a-2, both of which are provided with lamps. Pressing the FAPT key 101a-1 establishes the FAPT mode so that the operator's panel 101 will operate on behalf of the automatic programming unit. In the FAPT mode, the key group 101c will be ineffective even if a key in the group is pressed, and the data input key group 101e for common use will work for the automatic programming unit. On the other hand, pressing the NC key 101a-2 establishes the NC mode, allowing the operator's panel 101 to work on behalf of the NC unit. Now the key group 101b will be ineffective even if these keys are pressed, and the data input key group 101e will operate in conjunction with the NC unit. The key group 101b for automatic programming includes state setting keys 101b-1 through 101b-6 for setting a variety of states in automatic programming, work designating keys 101b-7 through 101b-10, and a transfer key 101b-11 for transferring NC data from the automatic programming unit to the NC unit. The state setting keys include a BACK key 101b-1 for returning a cursor when a data input is made, and a WIDE key 101b-203a for expanding the display. Among the work designating keys, the RO key 101b-7 is for designating the start of automatic programming as well as a shift to the next step. The Rl key 101b-8 is pressed when input information displayed on the screen is to be revised in the FAPT mode, the R2 key 101b-9 is used in making inputs and outputs with respect to a material file and tooling file, and the R3 key 101b-10 is pressed to discontinue automatic processing which is underway. The key group 101c for the NC unit includes various function keys 101c-1 through 101c-6, keys 101c-7, 101c-8 for turning the page of the display screen, keys 101c-9, 101c-10 for moving a cursor, and a start key 101c-11 for starting NC control on the basis of created NC data.

An OFSET key 101c-1 is used to display and set an offset quantity, a POS key 101d-2 is used to display present position, a PRGRM key 101c-3 is employed to display the contents of a program or the block currently being executed as well as the next block, a PARAM key 101c-4 finds use in displaying and setting parameters, and an ALAM key 101c-5 is used to display the contents of an alarm. The I/O selection key group 101d, which is effective in both the FAPT and NC modes, includes a FAPT key 101d-1 for connecting a data input/output unit to the automatic programming unit, and an NC key 101d-2 for connecting the data input/output unit to the NC unit. The key group 101e for data input includes a key group 101e-1 for executing arithmetic operations and function operations, a symbolic key group 101e-2 used in entering part profiles, numerical values and alphabetic characters, and a shift key 101e-3 pressed when entering the alphabetic character indicated at the lower right of each keytop. The symbolic keys function to enter profiles or numerical values, depending upon the automatic programming step.

(1) If the FAPT key 101a-1 is pressed to establish the FAPT mode and this is followed by pressing the RO key 101b-7, a picture for selecting an automatic progamming step is displayed on the graphic display screen, as shown in Fig. 2(A). If the numerical value key 1 is pressed and then the NL key under these conditions, the graphic display screen presents a display of the names of blank materials, the menu numbers thereof and a prompt concerning the material, as shown in Fig. 2(B). Accordingly, if the blank material is aluminum, the menu number 4 corresponding to aluminum is entered using a symbolic key and the NL key is then pressed. This ends the entry of the blank.

(2)   Next, if the RO key 101b-7 is pressed, the graphic display screen displays four drawings indicating drawing formats, the menu numbers 1, 2, 3, 4 thereof, and a prompt calling for selection of a coordinate system, as shown in Fig. 2(C). Specifically, in the case of a turning machining operation, a design drawing is written in any one quadrant of four coordinate systems, namely a first quadrant, second quadrant, third quadrant or fourth quadrant, depending upon how the design drawing is written. Therefore, the graphic display screen displays diagrams representing the respective coordinate systems together with appended menu numbers, namely numerals 1, 2, 3 and 4 representing the corresponding quadrants. Thereafter, a coordinate system may be selected in response to a prompt by entering the menu number corresponding to the quadrant in which the part on the design drawing is expressed, followed by pressing the NL key.

(3)   If the RO key 101b-7 is pressed at the conclusion of coordinate system selection, a picture for entering blank profile and its dimensions appears on the graphic display screen, as shown in Fig. 2(D). While viewing what is displayed, one enters the blank profile, its dimensional values L, D, $D_O$, and the position of a base line ZP. Specifically, since the profiles of blanks to be turned are broadly classified into a cylinder, hollow cylinder and special profile (special blank), the pictures of these blanks and their menu numbers are displayed, as shown in Fig. 2(D), one of the blank profiles is selected from among the displayed blank profiles, then, in accordance with inquiries calling for dimensional values, namely the length L, thickness D, bore diameter $D_O$ and base line position ZP of the blank, these dimensions are entered. This completes the entry of the blank profile and dimensional values.

(4)  When the part profile and its dimensional values are entered and the RO key 101b-7 is pressed, coordinate axes and the blank profile (dotted line), as well as machined profile (part profile) inquiries, are displayed on the graphic display screen. Accordingly, in response to the inquiries and while observing the design drawing, one operates the profile symbol keys (keys indicated by ↑, →, ↓, ←, , , , , , ), the C key indicating a chamfered portion, the G key indicating a groove portion, the R key representing a rounded portion, the T key representing a threaded

0165999

portion, and the N key indicating a notched portion, thereby to enter the part profile. It should be noted that whenever one element of the part profile is entered by pressing a profile symbol key, a prompt calling for the dimensions of the element is displayed, in response to which dimensions taken from the design drawing are entered. For example, when a straight line element is entered by pressing one of the profile symbol keys (keys indicated by $\uparrow$, $\longrightarrow$, $\downarrow$, $\longleftarrow$, , , , , , ), prompts appear asking for a diameter value (DX) at the end point of the straight line, a Z value (Z) of the end point, whether the straight line contacts the preceding shape element or the next shape element, an angle (A) defined by the straight line and the Z axis, and the like. Dimensions written on the design drawing are entered in response to the prompts. The NL key is pressed if predetermined dimensions are not written on the design drawing (e.g., the angle defined by the straight line and the Z axis. When one of the profile symbol keys (keys indicated by , ) is pressed to enter a circular arc, prompts appear asking for a diameter value (DX) at the end point of the circular arc, a Z value (Z) of the end point of the circular arc, whether the circular arc contacts the preceding shape element or the next shape element, the circular arc radius, the coordinate values of the center of the circular arc along each axis, and the like. Dimensions written on the design drawing are entered in response to the prompts. When all elements of the part profile and the dimensions thereof have been entered, the profile of the machined part in accordance with the entered part profile and dimensions is displayed on the graphic display screen, as shown by the solid line in Fig. 2(E).

(5)   Thereafter, when the RO key 101b-7 is pressed, the positional relationship among the machined profile, the turret and the machine reference point are displayed, as shown in Fig. 2(F), and prompts calling for the machine reference point and turret index position, which are necessary for NC data creation, are displayed.   When predetermined numerical values are entered by pressing the profile symbol keys in response to the prompts, the entry of machine reference point and turret index position ends.

(6)   When the entry of machine reference point and turret index position ends, prompts for machining process selection are displayed on the graphic display screen, as shown in Fig. 2(G). Specifically, when a single part is to be machined by a lathe, the machining processes available include (a) center drilling, (b) drilling, (c) rough cutting of outer diameter, (d) rough cutting of inner diameter, (e) semi-finishing of outer diameter, (f) semi-finishing of inner diameter, (g) outer diameter finishing, (h) inner diameter finishing, (i) grooving and (j) threading. Therefore, the names of these machining processes are displayed together with their menu numbers. Accordingly, depending upon which machining process is to be carried out, one enters the name of the desired machining process, which appears on the screen, by way of its menu number, and presses the NL key.

(7) Next, prompts calling for the tool to be used in the entered machining process are displayed, as shown in Fig. 2(H). Accordingly, the tool to be used is determined, after which one responds to the prompts by entering the tool number and tool position correction number. When the tool number and tool position correction number have been entered, the entered data are converted into a T code, the T code and the tool position correction values along the respective axes are displayed at the upper right portion of the screen, as shown in Fig. 2(I), and a prompt calling for tool shape data is simultaneously displayed at the bottom of the screen. One responds to the prompts by entering the nose radius RN of the tool used, cutting blade angle AC, nose angle AN, imaginary tool nose position XN, ZN, nose width WN (only for groove cutting tool), the angle AS at which the tool is mounted on the turret, and the mounting position XS, ZS. Fig. 3 shows views for describing the shapes of various tools. The positive direction of the cutting blade angle AC is counter-clockwise, with a main cutting blade (the bolds lines in the Figure) serving as a reference. The positive direction of the tool nose angls AN is clockwise, with the main cutting blade serving as a reference. Fig. 4 is a view for describing the mounting of a tool TL on a turret TR. Where the cutter is located and in what direction are entered by being expressed in the form of the mounting angle AS and mounting position ZS, XS. The positive direction of the mounting angle AS is counter-clockwise.

(8) When entry of the data indicative of the tool used ends, the graphic display screen displays prompts calling for cutting conditions for the purpose of implementing the entered cutting process, as shown in Fig. 2(I). In response to the prompts, one enters such cutting conditions as clearance quantities CX, CZ, finishing tolerances TX, TZ, depth of cut D, retraction quantity U, cutting velocity V and feedrates F1, F2, F3.

(9) When entry of the cutting conditions ends, prompts calling for cutting directions in the machining process are displayed on the graphic display screen, as shown in Fig. 2(J). The steps for entering cutting direction are steps for determining (a) whether machining is to be performed by moving the tool in the -X direction, as shown in Fig. 3(A), (b) whether machining is to be performed by moving the tool in the -Z direction, as shown in Fig. 3(B), (c) whether machining is to be performed by moving the tool in the +X direction, and (d) whether machining is to be performed by moving the tool in the +Z direction. For (a), the ↓ key among the profile symbol keys is pressed; for (b), the ⟵ key is pressed; for (c), the ↑ key is pressed; and for (d), the ⟶ key is pressed. Thus is cutting direction entered.

(10) When entry of cutting direction ends, a graphic for determining the area (machining area) to be machined by the entered machining process is displayed on the graphic display screen, as illustrated in Fig. 4. Specifically, the blank profile, cursors C1, C2 and prompts calling for the machining area are displayed on the screen. It should be noted that two cursors are displayed along the machined profile, one used for entering the starting point of the machining area and the other used for entering the end point of the machining area. The final part profile is displayed in the form of a solid line, and the blank profile appears as a dashed line.

Accordingly, the R1 key 101b-8 is pressed to position cursors C1, C2 at the starting and end points of the machining area. Note that the cursors can be moved forward or backward along the part profile depending upon whether the BACK key 101b-1 is off (lamp off) or on (lamp on). When entry of the starting and end points is concluded, where machining is to be performed in the machining process is entered by using a profile symbol key. That is, when the directions of the machining area as seen from the starting and end points are entered by using profile symbol keys, a shaded portion bounded by two straight lines Lx, Lz, the blank profile and the final part profile is recognized as the machining area, as shown in Figs. 4(A), (B), (C).

(11)  When entry of the machining area ends, the graphic display screen displays the blank profile that would remain after cutting away the entered machining area.  Displayed at the same time are the entered tool and an inquiry as to whether a different area is to be cut by the same tool.

(12)  If a different area is to be cut by the same tool, the fact is entered (the numerical value key 1 and the NL key are pressed) and so are the cutting directions and area.  By way of example, in a case where the groove machining process is to be applied to two locations (portions G1, G2), as shown in Fig. 7, with each of the locations being grooved by the same tool, the numerical value 1 and the NL key are pressed after entering the machining area data for groove G1. This is followed by entering the machining area data for the groove G2.

If cutting a different area with the same tool is not required, the numeric key 0 and the NL key are pressed.

(13)  When the entry of data necessary for carrying out the first machining process is completed through the foregoing steps, the operator decides whether a different machining process is required in order to obtain the final part profile. If there is such a requirement, then the RO key 101b-7 is pressed. This causes the graphic display screen to display a picture for selection of an automatic programming step, as depicted in Fig. 2(A). If this is followed by pressing the 4 key to select the "MACHINING DEFINITION" step, the machining process selection prompts shown in Fig. 2(G) are displayed on the graphic display screen. Thereafter, if machining process selection, determination of tool used, entry of tool data, entry of cutting direction and entry of machining area are performed for all of the machining processes just as above, then all of the data necessary for obtaining the final part profile will have been entered. The automatic programming unit, on the basis of the entered data, then creates NC data and causes the tool trajectory to be displayed on the graphic display screen, thus ending programming. The foregoing sets forth the details of conventional automatic programming.

Fig. 8 is a block diagram of an embodiment of the present invention, Fig. 9 is a flowchart of processing according to the present invention, and Fig. 10 is a view for describing tool selection criteria according to the present invention.

In Fig. 8, numeral 201 denotes a non-volatile memory having a first area 201a in which are previously stored tool numbers for respective tools, the names of machining processes which use these tools and data indicative of the shapes of the tools, thereby forming a tool data file, and a second area 201b which stores a plurality of tooling files #1, #2,... #n. Each tooling file comprises the tool number of tools that are to be loaded on a turret at the same time, tool shape data, data indicative of how the tools are to be mounted on the turret, and the names of the machining processes used. The plurality of tooling files #1, #2,... #n are stored in the second area 201b upon suitably changing the combination of tools in each file. Numeral 202 designates a graphic display unit, 203 a processor, 204 a ROM storing a control program, 205 a RAM for storing data entered from the operator's panel 101 (Fig. 1), the results of processing and created NC data, and 207 an NC data output unit for delivering created NC data to an external memory medium 207 such as a paper tape or bubble cassette.

As in the conventional method, material, format of the design drawing, profile and dimensional values of the blank, part profile and its dimensional values, machine reference point and turret index position are entered from the operator's panel 101 in a conversation with the graphic display screen. Also entered from the operator's panel is the tooling file number, followed by entry of the machining process. When, say, outer diameter rough cutting is entered as the machining process, tool selection processing set forth hereinbelow starts. It should be noted that a criterion for tool selection is that the tool used in the specified machining process not interfere with the workpiece. For example, if outer diameter rough cutting is performed by moving a tool along the -Z axis in a case where a part profile is as indicated by the solid line in Fig. 10(A), the conditions which assure that the tool will not interfere with the workpiece at machining are

$$AC \geq \beta + \delta - 90^{\circ} \qquad (1)$$

$$AC + AN \leq 90^{\circ} - (\alpha + \delta) \qquad (2)$$

where $\delta$ is an allowance angle, which is already known, AC stands for the cutting blade angle, AN represents the nose angle, and $\alpha, \beta$ denote the angles (both of which are positive) defined between the Z axis and part profile elements on the part side. When the angle is determined in such a manner that the counter-clockwise direction is positive with the Z axis serving as the reference, the angle is expressed by $\alpha$. When the angle is determined in such a manner that the clockwise direction is positive with the Z axis serving as the reference, the angle is expressed by $\beta$. If condition (1) does not hold in a case where the outer diameter rough cutting of Fig. 10(A) is performed by using the tool shown in Fig. 3(C), the cutter will cut into the part side of the part profile, as indicated by the dashed line in Fig. 3(B), making it impossible to obtain the part profile desired. If condition (2) does not hold, then the cutter will cut into the part side of the part profile, as indicated by the dashed line in Fig. 3(C), making it impossible to obtain the part profile desired. Likewise, if condition (2) does not hold in a case where the outer diameter rough cutting of Fig. 10(A) is performed by using the tool shown in Fig. 3(A), the cutter will interfere with the workpiece, as indicated by the dashed line in Fig. 10(D). Accordingly, when outer diameter rough cutting is entered as the machining process, the following steps are performed:

(a) The processor 203 obtains the number n of part profile elements by using the entered part profile data. In addition, the processor calculates the angle defined between each part profile element and the Z axis on the part side, discriminates whether the angle is an angle in the clockwise or counter-clockwise direction with the Z axis serving as the reference, and stores the angle and direction in the RAM 205. Note that if the part profile element is a straight line, the angle is found from $\tan^{-1}(z/x)$, using incremental values x, z of the straight line along the respective axes. If the part profile element is a circular arc, then the processor finds the angle defined between the Z axis and the tangents to the arc at the starting and end points.

(b) Next, the processor 203 retrieves the tool usable in the outer diameter rough cutting operation from the tooling file designated by the entered tooling file number and sets the cutting blade angle AC and nose angle AN of the tool in an internal register.

(c) The processor 203 thereafter performs the operation $1 \longrightarrow i$.

(d) The processor 203 then goes to the RAM 205 to read out the angle of the i-th part profile element and data (referred to as direction data) indicating whether the angle is a clockwise or counter-clockwise angle.

(e) If the read angle is found to be the clockwise angle $\beta$ following discrimination of the direction data, magnitude discrimination is performed in accordance with expression (1). If the angle is found to be the counter-clockwise angle $\alpha$, then magnitude discrimination is performed in accordance with expression (2).

(f) If the condition expressed by (1) or (2) holds in the magnitude discrimination, the operation

$$i + 1 \longrightarrow i$$

is performed to increment i. This is followed by discriminating the magnitudes of i and the number n of profile elements.

(g) If i>n holds, or in other words, if a tool for outer diameter rough cutting that will not interfere with the workpiece exists in the designated tooling file, the tool number of the tool, the tool's shape data and mounting data are read out of the

0165999

tooling file and stored in the RAM 205, thus ending processing.

(h) If i≤n is found to hold in the discrimination process of step (f), on the other hand, processing from step (d) onward is executed.

(i) If neither the condition of expression (1) nor the condition of expression (2) holds in the discrimination process of step (e), it is determined whether a different tool for outer diameter rough cutting exists in the designated tooling file. If a different tool for outer diameter rough cutting is contained in the tooling file, then the processing from step (b) onward is executed with respect to this tool.

(j) However, if a different tool for outer diameter rough cutting does not exist in the tooling file, or in other words, if all outer diameter rough cutting tools in the tooling file will interfere with the workpiece, then the processor 203 causes the display screen to display a message to the effect that outer diameter rough cutting cannot be performed with the designated tooling file. The processor then ends processing.

If a tool which will not interfere with the workpiece cannot be found in the designated tooling file, a message to this effect is displayed. However, it can be arranged so that a tool which will not interfere with the workpiece is found in a different tooling file.

Furthermore, though outer diameter rough cutting is entered as the machining process according to the foregoing, the invention is not limited to such an arrangement but can naturally be applied to instances where other machining processes are entered. Fig. 11 is a flowchart of processing for a case where grooving is entered as the machining process. The criteria for selecting a tool for grooving are as follows:

(1)  Letting $W_m$ represent the groove of maximum width among all of the grooves in the final part profile, the tool having the maximum nose width is selected from among groove cutting tools of cutter nose width smaller than $W_m$ and this tool is used to cut grooves of groove width greater than said nose width.

(2)  Letting $W_m'$ represent the groove of maximum width among grooves smaller than said nose width, the tool having the maximum nose width is selected from among groove cutting tools of nose width smaller than $W_m'$ and this tool is used to cut grooves of groove width greater than said nose width.

(3)  Thereafter, a groove cutting tool is selected in accordance with the criterion (2). It should be noted that groove width in the above selection criteria is taken as effective groove width ($G_w-2\ T_w$) obtained by subtracting finishing tolerance (already known) at both edges of the tool from the actual groove width $G_w$ (see Fig. 12).

(a)  Accordingly, when a groove cutting process is entered as the machining process, the processor 203 first checks the entered part profile data, lists up all grooves and finds the number M of the grooves.

(b)   The processor 203 then performs the

operations $1 \longrightarrow i$, $1 \longrightarrow j$.

(c)   The processor 23 thereafter obtains the i-th

largest groove width $W_i$ from among all groove widths.

(d)   Upon obtaining the groove width $W_i$, the

processor 203 obtains the number N of groove cutting tools contained in the designated tooling file and, if

$N \geq 1$ holds, retrieves the tool having the j-th largest

nose width $WN_j$ from among these groove cutting tools.

(e)   Next, the effective groove width W that takes into account the finishing allowance $T_w$ is obtained

from the equation

$$W = W_i - 2 \cdot T_w \qquad (3)$$

and it is determined whether the following relation

holds:

$$W \geq WN_j \qquad (4)$$

(f)   If expression (4) is satisfied, the tool is adopted as that for cutting the groove having the i-th largest width.

(g)   Next, i is incremented in accordance with

$$i + 1 \longrightarrow i$$

(h)   It is then determined whether i>M holds.  If

$i \leq M$ is found to hold, processing from step (c) onward is executed.  If i>M holds, processing for selecting the groove cutting tool is terminated.

(i)   If expression (4) is not satisfied in the discrimination process of step (e), then j is incremented in accordance with

$$j + 1 \longrightarrow j$$

and the magnitude of j is compared with the magnitude of the number N of groove cutting tools.  If $j \leq N$ holds, processing from step (d) onward is repeated.

(j)   If expression 4 fails to hold (i.e., if $j > N$ holds) for all groove cutting tools constituting the designated tooling file, then the processor 203 causes an alarm to be displayed as well as the nose width that satisfies expression (4), and then ends processing.

As described above, the present invention is arranged to create a tooling file for a plurality of tools loaded simultaneously on a turret by registering in memory the name of a machining process in which each tool is used, data indicative of the shape of each tool, and data indicative of how each tool is mounted on the turret, registering beforehand a plurality of tooling files having different tool combinations, specifying a predetermined tooling file together with data specifying a final part profile and machining process, and selecting a tool for the specified machining process from the tooling file.  As a result, an automatic programming apparatus can be provided in which tools can be selected automatically and which exhibits excellent operability without requiring that tool shape data and tool mounting data be entered item

-27-

by item.

Further, according to the present invention, since a tool which will not interfere with a workpiece can be selected from a specified tooling file, fewer tools need to be searched. This enables the time required for tool selection to be reduced.

0165999

CLAIMS:

1. A tool selection method in automatic programming, characterized by having a step of creating a tooling file for a plurality of tools loaded simultaneously on a turret by registering in memory the name of a machining process in which each tool is used, data indicative of the shape of each tool, and data indicative of how each tool is mounted on the turret, and registering beforehand a plurality of tooling files having different tool combinations, a step of specifying a predetermined tooling file together with data specifying a final part profile and machining process, and a step of selecting a tool for said specified machining process from said tooling file.

2. A tool selection method in automatic programming according to claim 1, characterized by having a step of displaying a message to the effect that a tool appropriate for the machining of said designated machining process does not exist among tools constituting said tooling file if such is the case.

3. A tool selection method in automatic programming according to claim 1, characterized by having a step of selecting a tool from another tooling file if a tool appropriate for the machining of said designated machining process does not exist among tools constituting said tooling file.

4. A tool selection method in automatic programming according to claim 1, characterized by providing a cutter nose angle AN and cutting blade angle AC in the tool shape data in advance, and selecting an outer diameter rough cutting tool that will not interfere with the workpiece from said specified tooling file upon taking said cutter nose angle AN and said cutting blade angle AC into account in a case where the machining process is outer diameter rough cutting.

5. A tool selection method in automatic programming according to claim 1, characterized by providing a cutter nose width in tool shape data indicative of groove cutting tools in advance, and selecting an appropriate groove cutting tool from said specified tooling file upon taking said cutter nose width and a groove width into account in a case where the machining process is groove cutting.

## FIG. 1

**FIG.2(A)**

=·=FAPT =·=

1. BLANK AND PART (DRAWING AND BLANK)
2. BLANK AND PART (PART PROFILE)
3. MACHINE REFERENCE POINT AND POSITION
4. MACHINING DEFINITION
5. CREATION OF NC DATA

0. END

NO. =

**FIG.2(B)**

☆☆☆ BLANK AND PART  ☆☆☆ MATERIAL

NO.    EXAMPLE OF MATERIAL
1      S45C
2      SCM
3      FC
4      AL
5      SUS
6      MATERIAL6
7      MATERIAL7
⋮         ⋮

MATERIAL  NO.=

**FIG.2(C)**

☆☆☆ BLANK AND PART ☆☆☆ DRAWING FORMAT

1. 
2. 
3. 
4. 

DRAWING FORMAT ---- DF =

**FIG. 2(D)**

☆☆☆BLANK AND PART☆☆☆ BLANK PROFILE & BASE LINE POSITION

1. CYLINDER

2. HOLLOW CYLINDER

3. SPECIAL BLANK

BLANK PROFILE---BF =

BLANK DIMENSIONS--L =

D =

BASE LINE POSITION  Zp =

**FIG. 2(E)**

☆☆☆BLANK AND PART ☆☆☆ PART PROFILE

SHAPE ELEMENT

+X

+Z

**FIG. 2(F)**

☆☆☆ MACHINE REFERENCE POINT AND TURRET ☆☆☆ MACHINE REFERENCE POINT

POSITION

MACHINE REFERENCE POINT

DXH =

ZH =

+X

+Z

ZH

DXH

**FIG. 2(G)**

☆☆☆ MACHINING ☆☆☆ TYPE OF MACHINING
　　　　DEFINITION

PROCESS 1.


TYPE OF PROCESS ------ PROCESS 01 =

1. CENTER BORING
2. DRILLING
3. OUTER DIAMETER
　　ROUGH CUTTING
4. INNER DIAMETER
　　ROUGH CUTTING
5. OUTER DIAMETER
　　INTERMEDIATE MACHINING
6. INNER DIAMETER
　　INTERMEDIATE MACHINING

7. INNER DIAMETER
　　FINISHING
8. OUTER DIAMETER
　　FINISHING
9. GROOVE CUTTING
10. THREAD CUTTING

**FIG. 2(H)**

☆☆☆ MACHINING DEFINITION ☆☆☆ TOOL DATA

PROCESS 01　OUTER DIAMETER
　　　　　　ROUGN CUTTING　T　X　Z

+X

+Z

MACHINING DATA (T CODE):

PROCESS NO. ----- TN =
TOOL POSITION
　　CORRECTION NO. --- TM =

TN =

**FIG. 2(I)**

☆☆☆ MACHINING DEFINITION ☆☆☆ TOOL DATA
PROCESS 01　OUTER DIAMETER　T0101 × 160 Z 180
+X　　　　　　ROUGN CUTTING

+Z

TOOL DATA, NO. = 1
CUTTER RADIUS ---- RN = 1
CUTTING BLADE ANGLE --- AC = 3
CUTTER NOSE ANGLE --- AN = 4S
IMAGINARY CUTTER
　　POSITION ----- XN = 1. ZN = 1

MOUNTING
　ANGLE --- AS = -90
MOUNTING
　POSITION -- XS = 20
　　　　　　ZS = 20

## FIG.2(J)

☆☆☆MACHINING DEFINITION          ☆☆☆ CUTTING CONDITIONS

CUTTING CONDITIONS
CLEARANCE QUANTITY---CX=2
                    C2=2
FINISHING TOLERANCE---TX=1.TZ=1
DEPTH OF CUT----D=5

BACK-UP QUANTITY
            ---U=1.
CUTING VELOCITY--V=4.5
FEEDRATE---F1=0.65
          F2=0.32
          F3=0.21

## FIG.2(K)

☆☆☆MACHINING DEFINITION          ☆☆☆ CUTTING DIRECTION

CUTTING DIRECTION -----CD = ◄—

↿ X AXIS NEGATIVE DIRECTION
↾ X AXIS POSITIVE DIRECTION
◄— Z AXIS NEGATIVE DIRECTION
—► Z AXIS POSITIVE DIRECTION          CD =

## FIG. 3

(A)          (B)          (C)          (D)

AC⊕  AN⊕      AN⊖          AC⊖          RN⊕
XN⊕ RN⊕      XN⊕ RN⊕      AN⊕          XN⊕
     ZN⊕          ZN⊕      RN⊕              ZN⊕
               WN⊕  AC=90  XN⊕  ZN=0  AC=-0.00001
                    AN=-90               AN=0.00002

(E)          (F)          (G)          (H)

AN⊖  AC⊖      AN⊕  XN⊕      AC⊕          AC⊖
RN⊕          RN⊕          ZN=0         AN⊕
     XN⊕          AC=-90  AN⊖          RN⊕  ZN=0
ZN⊖          ZN⊖  AN=90   RN⊕          XN⊕
               WN⊕         XN⊕

# FIG. 4

(A)

(B)

(C)

(D)

# FIG.5(A)

# FIG.5(B)

# FIG.6(A)

# FIG.6(B)

# FIG.6(C)

# FIG.7

# FIG. 8

204 ROM
205 RAM
101 OPERATORS PANEL
202 GRAPHIC DISPLAY UNIT

203 PROCESSOR
- FLAGREGISTER
- AC
- AN
- n
- i

201a
TOOL NO. MACHINING PROCESS SHAPE DATA
201 DATA FILE
TOOLING FILE
#1
#2
⋮
#n
NON-VOLATILE MEMORY
201b

206 NC DATA OUTPUT UNIT
207 EXTERNAL STORAJE MEDIUW

0165999

# FIG.9(A)

```
        ( START )
           │
           ▼
┌──────────────────────────────┐
│ ENTER VARIOUS DATA AND TOOLING│
│ FILE NUMBER                   │
└──────────────────────────────┘
           │
           ▼
┌──────────────────────────────┐
│ ENTER MACHINING PROCESS       │
└──────────────────────────────┘
           │
           ▼
    ╱ OUTER DIAMETER ROUGH ╲      NO
    ╲ CUTTING?            ╱ ─────────▶ ···
           │ YES
           ▼                            (a)
┌──────────────────────────────┐
│ OBTAIN ANGLE BETWEEN Z AXIS   │
│ AND EACH PART ELEMENT, DIRECTION│
│ DATA AND NUMBER n OF ELEMENTS │
└──────────────────────────────┘
           │                            (a)
     NO ╱ ANGLES FOR ALL ELEMENTS ╲
    ◀───╲ OBTAINED?              ╱
           │ YES
  (C)──────┤                            (b)
           ▼
┌──────────────────────────────┐
│ RETRIEVE TOOL FOR OUTER DIAMETER│
│ ROUGH CUTTING FROM SPECIFIED  │
│ TOOLING FILE AND READ AC, AN  │
└──────────────────────────────┘
           │                            (c)
           ▼
      ┌──────────┐
      │  1 ──▶ i │
      └──────────┘
           │                       (D)
           ▼                      (d)
┌──────────────────────────────┐
│ READ ANGLE OF i-th ELEMENT    │
│ AND DIRECTION DATA            │
└──────────────────────────────┘
           │                            (e)
     NO ╱ CLOCKWISE ANGLE? ╲
    ◀───╲                 ╱
           │ YES
  (B)      (A)
```

# FIG. 9(B)

```
              (B)                                      (A)
               │                                        │
    NO  ┌──────▼──────────────┐ (e)         NO  ┌───────▼────────────┐ (e)
   ◄────┤ EXPRESSION (2) SATISFIED? │      ◄────┤ EXPRESSION (1) SATISFIED? │
   │    └──────┬──────────────┘            │    └───────┬────────────┘
   │          YES                          │           YES
   │           │                           │            │
   │           │          ┌────────────────┘            │
   │           │          │                             ▼
   │           │          │                  ┌──────────────────┐ (f)
   │           │          │                  │   i + 1 ── i     │
   │           │          │                  └─────────┬────────┘
   │           ▼──────────┘                            │
   │    ┌──────────────────────────┐ (i)    ┌──────────▼────────┐ (f)     NO
   │YES │ DOES DIFFERENT OUTER DIAMETER │    │      i > n        ├────────► (D)
   ◄────┤ ROUGH CUTTING TOOL EXIST IN │     └──────────┬────────┘
   │    │ SPECIFIED TOOLING FILE ?   │               YES
   │    └─────────────┬──────────────┘                 │
   │                 NO                                 ▼            (g)
   ▼                  │                    ┌────────────────────────────┐
  (C)                 │         (j)        │ READ TOOL NUMBER,          │
                      ▼                    │ TOOL SHAPE DATA AND        │
          ┌───────────────────────┐       │ TOOL MOUNTING DATA OUT OF  │
          │ EFFECT ALARM DISPLAY  │       │ TOOLING FILE AND STORE IN  │
          └───────────┬───────────┘       │ RAM 205                    │
                      │                   └──────────────┬─────────────┘
                      │◄─────────────────────────────────┘
                      ▼
                  ( END )
```

# FIG. 12

-10-

FIG.10(A)

FIG.10(B)

FIG.10(C)

FIG.10(D)

# FIG. 11

```
                    ( START )
                       │
                       ▼                    (a)
         ┌─────────────────────────┐
         │ LIST UP ALL GROOVES     │
         │ AND OBTAIN NUMBER OF    │
         │ GROOVES M               │
         └─────────────────────────┘
                       │
                       ▼                    (b)
              ┌─────────────────┐
              │  1 → i , 1 → j  │
              └─────────────────┘
                       │
                       ▼                    (c)
         ┌─────────────────────────┐
         │ OBTAIN i-th LARGEST     │
         │ GROOVE WIDTH Wi         │
         └─────────────────────────┘
                       │
                       ▼                    (d)
         ┌─────────────────────────┐
         │ OBTAIN j-th LARGEST     │
         │ CUTTER NOSE WIDTH WNj   │
         └─────────────────────────┘
                       │
                       ▼                    (e)
              ┌─────────────────┐
              │  Wi - 2·Tw → W  │
              └─────────────────┘
                       │
                       ▼            (e)
                  ╱ W ≧ WNj ╲──── NO ──────┐
                  ╲         ╱               │
                       │ YES                │
                       ▼         (f)        ▼           (i)
         ┌─────────────────────────┐   ┌─────────────┐
         │ ADOPT TOOL HAVING CUTTER│   │  j + 1 → j  │
         │ NOSE WIDTH WNj AS TOOL  │   └─────────────┘
         │ FOR GROOVE HAVING GROOVE│          │
         │ WIDTH Wi                │          ▼         (i)
         └─────────────────────────┘     ╱ j > N ╲── NO
                       │                  ╲       ╱
                       ▼         (g)           │ YES
              ┌─────────────────┐              ▼           (j)
              │  i + 1 → i      │       ┌─────────────────┐
              └─────────────────┘       │ DISPLAY CUTTER  │
                       │                │ NOSE WIDTH      │
                       ▼       (h)      │ SATISFYING      │
          NO ──╱ i > M ╲               │ EXPRESSION  (4) │
              ╲       ╱                 └─────────────────┘
                   │ YES
                   ▼
                ( END )
```

# INTERNATIONAL SEARCH REPORT

International Application No. PCT/JP84/00590

**I. CLASSIFICATION OF SUBJECT MATTER** (if several classification symbols apply, indicate all) [3]

0165999

According to International Patent Classification (IPC) or to both National Classification and IPC

Int. Cl$^4$   G05B 19/403 // B23Q 15/00

**II. FIELDS SEARCHED**

| | Minimum Documentation Searched [4] | |
|---|---|---|
| Classification System | | Classification Symbols |
| IPC | | G05B 19/18, 19/403 |

Documentation Searched other than Minimum Documentation
to the Extent that such Documents are Included in the Fields Searched [5]

Jitsuyo Shinan Koho          1971 - 1984
Kokai Jitsuyo Shinan Koho    1971 - 1984

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| A | JP, A, 56-50404 (Daihatsu Motor Co., Ltd.) 7 May 1981 (07. 05. 81) & BE, A, 885506 & FR, A, 2466798 & WO, A, 8101061 & AU, A, 6339680 & GB, A, 2062293 & SE, A, 8103421 & US, A, 4445182 | |
| A | JP, A, 54-86887 (Toyoda Machine Works, Ltd.) 10 July 1979 (10. 07. 79) & EP, A, 2750 & ES, A, 476238 & US, A, 4209847 & EP, B, 2750 | |
| A | JP, A, 58-155101 (Yamazaki Tekkosho Kabushiki Kaisha) 14 September 1983 (14. 09. 83) & FR, A, 2523329 & DE, A, 3308764 & GB, A, 2117926 | |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| February 13, 1985 (13. 02. 85) | February 25, 1985 (25. 02. 85) |

| International Searching Authority [1] | Signature of Authorized Officer [20] |
|---|---|
| Japanese Patent Office | |

Form PCT/ISA/210 (second sheet) (October 1981)